# EUROPÄISCHE PATENTSCHRIFT

(11) **EP 2 397 340 B1**
(45) Veröffentlichungstag und Bekanntmachung des Hinweises auf die Patenterteilung: **03.04.2013**
(21) Anmeldenummer: 11003349.5
(22) Anmeldetag: 21.04.2011
(51) Int. Cl.: B60B 35/04, B60G 9/00, B62D 65/12

(54) **Kraftfahrzeugachse**
Motor vehicle axle
Axe de véhicule automobile

(30) Priorität: 16.06.2010 DE 202010009162 U
(43) Veröffentlichungstag der Anmeldung: 21.12.2011
(73) Patentinhaber: Gigant-Trenkamp & Gehle GmbH, 49413 Dinklage (DE)
(72) Erfinder: Barlage, Wilfried, 49626 Berge (DE); Helm, Eike, 49632 Essen (DE)
(74) Vertreter: Busse & Busse

(56) Entgegenhaltungen:
- WO-A1-2009/053491
- DE-A1- 10 121 862
- DE-A1-102006 015 671

## Beschreibung

Die vorliegende Erfindung bezieht sich auf eine Kraftfahrzeugachse mit einem Achsrohr und einer endseitig damit verbundenen Radnabe, wobei die Radnabe einen stehenden Außenring und einen drehenden Innenring aufweist und der stehende Außenring der Radnabe mit dem Achsrohr verbunden ist.

Eine gattungsgemäße Kraftfahrzeugachse ist in der Schrift DE 101 21 862 offenbart. Der Vorteil der gattungsgemäßen Bauart ist darin zu sehen, die Herstellung des Achsrohres vereinfachen zu können und die Verbindung des Achsrohres mit der Radnabe durch ein bloßes Verschweißen einer Befestigungshülse mit dem Achsrohr und der Radnabe herzustellen. Der rotierende Innenring kann dann mit einem Radträger verbunden werden, der auch die Bremsscheibe tragen oder ausbilden kann. Die Herstellung der Kraftfahrzeugachse ist dadurch insgesamt kostengünstiger und mit einem geringeren Aufwand verbunden. Weitere Ausgestaltungen von Kraftfahrzeugachsen sind bekannt aus den Schriften WO 2009/053491 A1, die eine Hülse offenbart, an die einstückig ein Lenker angeformt ist, sowie der DE 10 2006 015 671 A1, in der ebenfalls eine Befestigungshülse und ein Längslenker als einstückiges Gussteil ausgeführt sind.

Die Anbindung einer gattungsgemäßen Kraftfahrzeugachse an ein Fahrzeug hat jedoch ansonsten herkömmlich über einen Satz von Lenkern zu erfolgen, die über verschiedene Bauteile mit der Kraftfahrzeugachse verbunden werden müssen.

Es ist die Aufgabe der vorliegenden Erfindung, den Bauaufwand für die Anbindung der gattungsgemäßen Kraftfahrzeugachse an ein Fahrzeug zu verringern.

Die Aufgabe wird gelöst, indem eine Befestigungshülse, die die Radnabe mit dem Achsrohr verbindet, als ein einziges Gussteil ausgebildet ist, an das der Lenker angeformt ist, und das Gussteil an seinem der Radnabe zugewandten Ende bereichsweise vom Radträger überdeckt ist..

Durch die Integration des Lenkers in das Gussteil der Befestigungshülse wird der Anbau der Achse an ein Fahrzeug erheblich vereinfacht. Der Arbeitsaufwand, die Befestigungshülse mit der Achsnabe und dem Achsrohr zu verschweißen, ändert sich durch die Integration des Lenkers in das Gussteil kaum. Mit dem Verschweißen der Befestigungshülse ist bei der erfindungsgemäßen Ausgestaltung des Gussteils aber auch der Lenker bereits montagefertig installiert, ohne dass dies zu Mehraufwand geführt hätte. Es werden weniger Bauteile benötigt, um die Kraftfahrzeugachse an ein Fahrzeug anzubauen. Durch die geringere Zahl an Bauteilen verringert sich auch die mögliche Zahl von Montagefehlern, und die Toleranzen können weiter minimiert werden.

Das Gussteil ist an seinem der Radnabe zugewandten Ende bereichsweise vom Radträger überdeckt. Durch die bereichsweise Überdeckung wird die nach außen weisende Öffnung der Radnabe und des Radlagers besser gegen sonst leichter eindringenden Schmutz geschützt.

Nach einer Ausgestaltung der Erfindung weist das Gussteil einen Hohlraumabschnitt, in den ein Teil des Achsrohrs einsteckbar ist, und einen Hohlraumabschnitt, in den der Außenring der Radnabe zumindest teilweise einsteckbar ist, auf und ein zwischen dem im Hohlraumabschnitt befindlichen Ende des Achsrohrs und dem im Hohlraumabschnitt befindlichen Ende der Radnabe verbleibender Abstand ist vom Gussteil überbrückt. Durch die Überbrückung kann das Achsrohr kürzer ausgeführt werden, was Gewicht und Kosten spart. Durch die Überbrückung können je nach Einschubtiefe des Achsrohrs in den zugehörigen Hohlraumabschnitt auch stufenlos unterschiedliche Achsbreiten ganz nach Kundenwunsch realisiert werden, soweit noch eine für die jeweiligen Festigkeitsanforderungen ausreichende Resteinstecktiefe des Achsrohres in die Befestigungshülse verbleibt. Das Gussteil ist ausreichend fest ausgestaltet, um die einwirkenden Kräfte aufzunehmen.

Nach einer Ausgestaltung der Erfindung ist der Lenker in der achsrohrseitigen Hälfte des Gussteils ausgebildet und steht in radialer Richtung zur Längsachse des Gussteils ab. Durch diese Gestaltung kann die Befestigungshülse im Bereich des Radträgers und der Bremsscheibe schlank gehalten werden, während der Lenker in einem Bereich von der Befestigungshülse absteht, in dem kein Bauraum für den Radträger und/oder für die Bremsscheibe benötigt wird.

Nach einer Ausgestaltung der Erfindung weist der Lenker ein Auge für die Aufnahme eine Lenkerlagers, eine Halterung für ein Bremsenbauteil und/oder einen Wellenstummel zur Verbindung mit einem Stoßdämpfer auf. Diese Bauteile können mit in die Gussform des Lenkers integriert werden und brauchen dann nicht mehr gesondert hergestellt und an den Lenker geschweißt oder geschraubt werden. Als Bremsenbauteil kommt beispielsweise die Bremszange oder ein ABS-Sensor in Betracht.

Nach einer Ausgestaltung der Erfindung ist an dem Lenker ein Flanschansatz ausgebildet. Der Flanschansatz kann beispielsweise zur Anbindung einer Luftbalgaufnahme genutzt werden. Es genügt, ein entsprechendes Aufnahmebauteil an den Flanschansatz anzuschrauben. Über den Flanschansatz ergibt sich eine gute flächige Verbindung und Abstützung der Bauteile miteinander.

Nach einer Ausgestaltung der Erfindung weist das Gussteil an seinem dem Achsrohr zugewandten Ende eine in Richtung der Längsachse des Achsrohrs verspringende Kante auf. Beim Verschweißen der Befestigungshülse mit dem Achsrohr ergibt sich so keine an einer Stelle des Achsrohrs umlaufende Schweißnaht, sondern der Verlauf der Schweißnaht alterniert über die Länge des Achsrohres gesehen, so dass sich eine bessere Krafteinleitung aus dem Achsrohr in die Befestigungshülse und andersherum über eine größere Länge des Achsrohres und auch der Befestigungshülse ergibt.

Nach einer Ausgestaltung der Erfindung ist der stehende Außenring der Radnabe vom Gussteil gebildet und der drehende Innenring in das Gussteil eingesetzt. Bei dieser Ausgestaltung kann darauf verzichtet werden, eine komplette separate Radnabe mit einem stehenden Außenring und einem drehenden Innenring mit der Befestigungshülse zu verbinden, die Befestigungshülse selbst in Gestalt des Gussteils bildet den feststehenden Außenring, in den der drehende Innenring eingesetzt ist. Vorteilhaft befinden sich noch Wälzlager und Abdichtungen zwischen dem stehenden Außenring und dem drehenden Innenring. Insgesamt kann durch diese Bauweise das Gewicht der kompletten Achse verringert werden.

Es wird ausdrücklich darauf hingewiesen, dass die vorstehend erläuterten Ausgestaltungen der Erfindung jeweils für sich oder in einer beliebigen technisch sinnvollen Kombination auch untereinander mit dem Gegenstand der im Anspruch 1 definierten Merkmalskombination kombinierbar sind. Weitere Abwandlungen und Ausgestaltungen der Erfindung lassen sich der nachfolgenden gegenständlichen Beschreibung und den Zeichnungen entnehmen.

Die Erfindung soll nachfolgend anhand eines Ausführungsbeispiels näher erläutert werden. Es zeigen:
- Fig. 1: eine Ansicht auf die erfindungsgemäße Achse,
- Fig. 2 und 3: verschiedene Ansichten auf die in Fig. 1 gezeigte Achse.
- Fig. 4 und 5: Ansichten auf das erfindungsgemäße Gussteil.

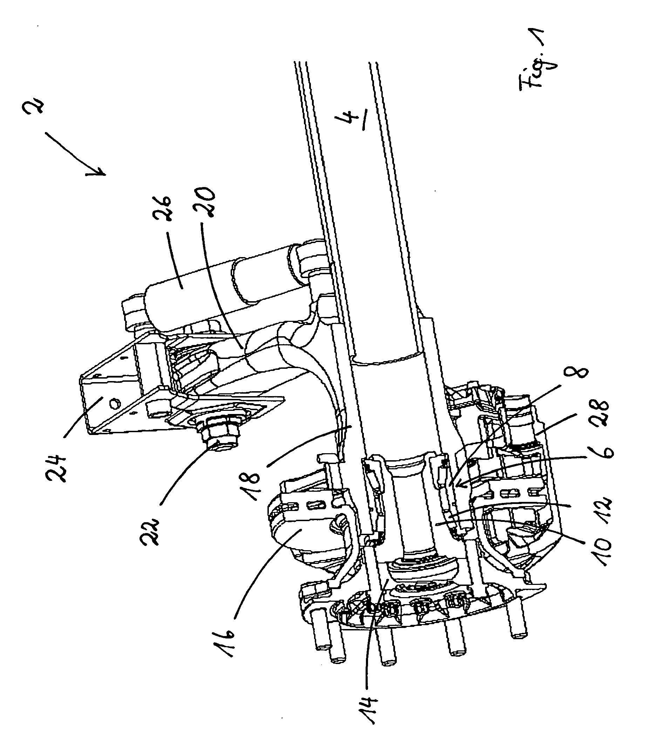

In Fig. 1 ist eine Kraftfahrzeugachse 2 in einer Längsschnittansicht dargestellt. Es ist nur ein Teil der Achse zu sehen. Die Achse verfügt über ein Achsrohr 4, das mit einer Radnabe 6 verbunden ist. Die Radnabe 6 ist zusammengesetzt aus einem stehenden Außenring 8 und einem drehenden Innenring 10, zwischen denen sich Wälzlager 12 befinden. Auf den drehenden Innenring 10 ist ein Radträger 14 aufgesetzt, der mit einer Bremsscheibe 16 verbunden ist. Auf den Radträger 14 können Räder aufgeschraubt werden.

Die Radnabe 6 ist mit dem Achsrohr 4 über eine Befestigungshülse 18 verbunden. Die Befestigungshülse 18 ist als ein rohrförmiger Baukörper ausgestaltet, von dem seitlich ein angesetzter Lenker 20 absteht. Die Befestigungshülse 18 verfügt über einen hohlen Innenraum, in den von der einen Seite her das Achsrohr 4 und von der anderen Seite her der stehende Außenring 8 der Radnabe 6 eingeschoben ist. Zwischen diesen beiden Bauteilen verbleibt im Ausführungsbeispiel ein Hohlraum, der von der Befestigungshülse 18 überbrückt ist. Je nach Ausgestaltung der Kraftfahrzeugachse 2 können die Bauteile aber auch auf Sitz aneinander aufgeschoben sein, so dass zwischen den Bauteilen kein freier Hohlraum mehr verbleibt. Durch eine Variation der Einschubtiefe des Achsrohres 4 in den Hohlraum der Befestigungshülse 18 ist es möglich, die jeweiligen Achsbreiten in einem gewissen Umfang zu variieren, ohne deshalb die Achsrohre 4 in unterschiedlicher Länge produzieren zu müssen.

Wie aus der Zeichnung ersichtlich ist, steht der Lenker 20 seitlich von der Längsachse der Kraftfahrzeugachse 2 ab. Aus der Darstellung in Fig. 1 ist erkennbar, dass die Befestigungshülse 18 und der Lenker 20 als einteiliges Bauteil hergestellt sind. Dies ist beispielsweise möglich, wenn die Befestigungshülse 18 einschließlich des Lenkers 20 als Gussteil hergestellt wird, das einstückig in einer Gussform gegossen worden ist.

An dem von der Befestigungshülse 18 entfernten Ende des Lenkers 20 befindet sich ein Lenkerlager, durch das hindurch eine Schwenkachse 22 verläuft. Die Schwenkachse 22 kann über eine Achsaufnahme 24 fahrzeugseitig mit einem Fahrzeug verbunden werden, so dass dadurch die Kraftfahrzeugachse 2 verschwenkbar an einem Fahrzeugrahmen gehalten ist. Schwenkbewegungen der Kraftfahrzeugachse 2 werden gegenüber dem Fahrzeug über einen Stoßdämpfer 26 abgedämpft. An der Befestigungshülse 18 befindet sich außerdem ein Bremsenbauteil 28, das über eine entsprechende Halterung, die an der Befestigungshülse 18 befestigt ist, mit dieser verbunden ist.

In der Schnittansicht ist gut erkennbar, dass der Radträger 14 mit der Bremsscheibe 16 die Befestigungshülse 18 teilweise übergreift. Es ist der erkennbar, dass die Radnabe 6 sehr kompakt gestaltet ist und wenig Bauraum beansprucht.

Die Befestigungshülse 18 ist im Ausführungsbeispiel auf eine vorbereitete Außenfläche des Achsrohres 4 aufgeschoben und sodann mit dem Achsrohr 4 verschweißt worden. Die Radnabe 6 kann beispielsweise über einen Sprengring in ihrer Einbaulage gehalten sein. Dadurch ergibt sich eine kostengünstige und einfache Montage.

Der Lenker 20 ist in der achsrohrseitigen Hälfte des Gussteils der Befestigungshülse 18 ausgebildet und steht in radialer Richtung zur Längsachse des Gussteils ab. Die Wandstärken des Gussteils sind so gewählt, dass sie dem Kräfteverlauf innerhalb des Bauteils stand zu halten vermögen.

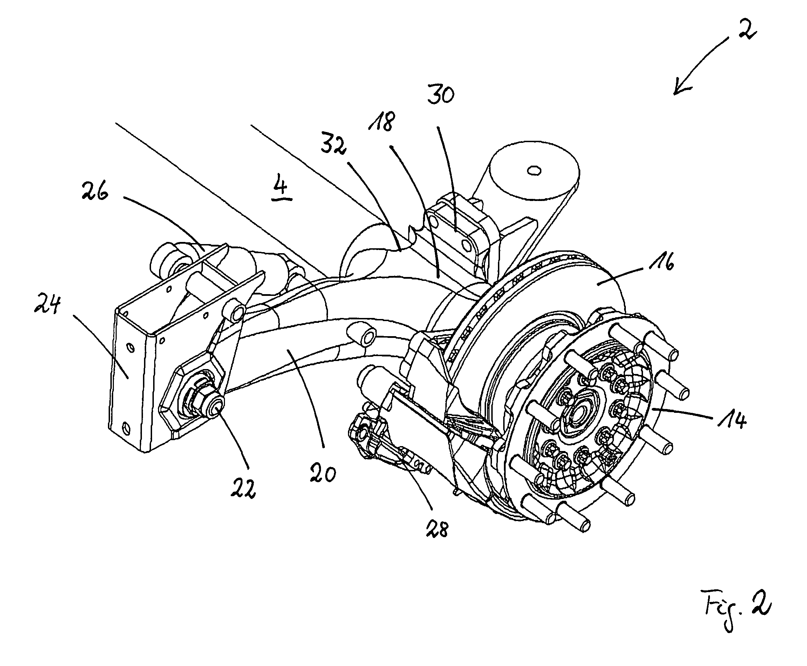

In Fig. 2 ist die in Fig. 1 abgebildete Achsenhälfte aus einer anderen Perspektive gezeigt. Aus dieser Ansicht ist das Gussteil der Befestigungshülse 18 nur teilweise erkennbar, da es durch die Bremsscheibe 16 teilweise verdeckt ist. Als Bremsenbauteil 28 ist die Bremszange erkennbar, die auf die Bremsscheibe 16 wirkt. Aus der in Fig. 2 gezeigten Ansicht auf die Kraftfahrzeugachse 2 ist insbesondere der Flanschansatz 30 gut erkennbar, an den im Ausführungsbeispiel ein Montagewinkel zur Verbindung mit einem Luftfederbalg angesetzt ist. Die Auslenkbewegungen des Lenkers 20 um die Schwenkachse 22 können dann über den Luftfederbalg abgefedert werden.

Aus der in Fig. 2 gezeigten Ansicht ist außerdem die verspringende Kante 32 des Gussteils der Befestigungshülse 18 erkennbar. Durch den im Ausführungsbeispiel bogenförmigen Verlauf der Kante 32 werden die auf das Achsrohr 4 zu übertragenden Kräfte über eine größere Umfangsfläche in das Achsrohr 4 eingeleitet. Die Verbindung zwischen der Befestigungshülse 18 und dem Achsrohr 4 kann bei einer solchen Ausgestaltung höhere Kraftmomente aufnehmen, ohne dass es zu Beschädigungen oder einem Bruch der Verbindung führt.

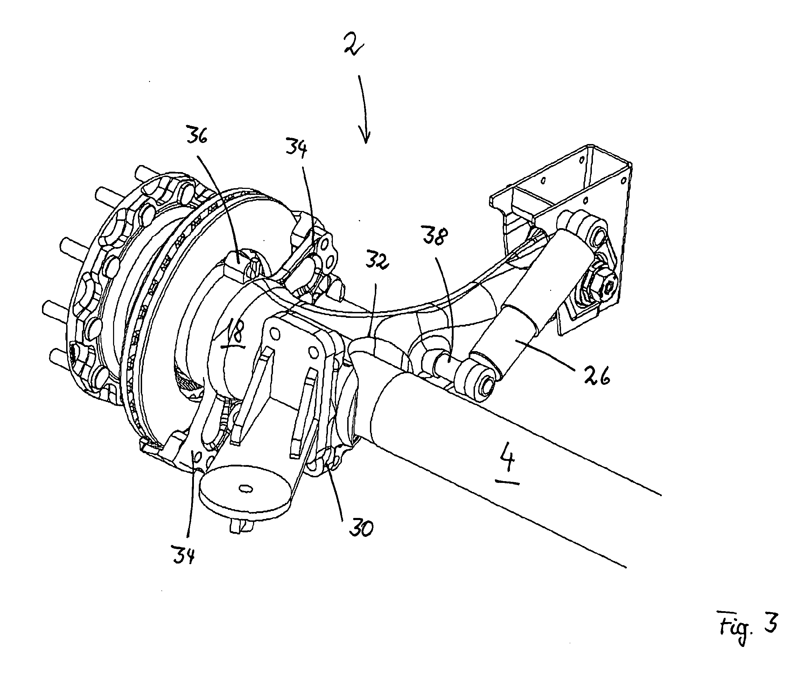

In der Fig. 3 ist der Abschnitt der Befestigungshülse 18 erkennbar, der die Radnabe 6 in sich aufnimmt. Einteilig mit diesem Abschnitt der Befestigungshülse 18 verbunden sind die Halterungen 34, an denen die Bremsenbauteile 28 befestigt sind.

Außerdem befindet sich in diesem Abschnitt der Befestigungshülse 18 eine Befestigungsmöglichkeit 36 für einen ABS-Sensor. An den Lenker 20 ist ein Wellenstummel 38 angegossen oder durch eine Aufnahmeöffnung hindurchgeschoben, an dem der Stoßdämpfer 26 befestigbar ist. Auch aus dieser Ansicht ist die verspringende Kante 32 gut erkennbar.

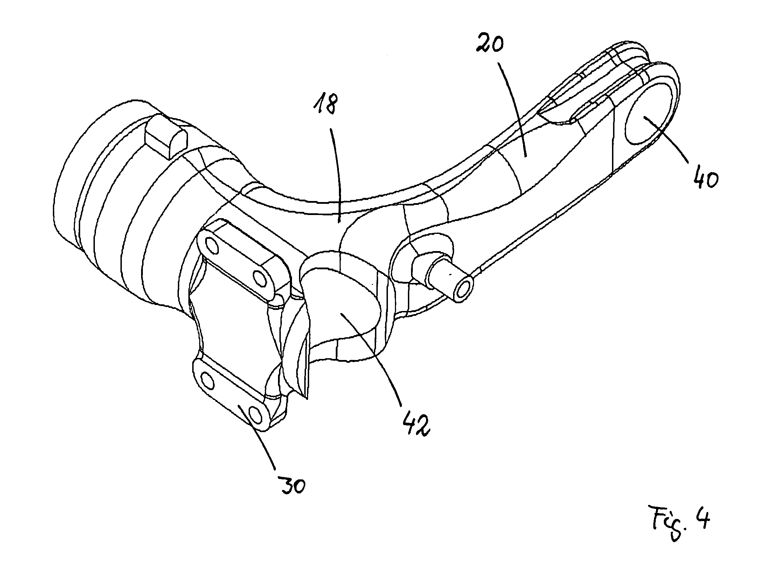

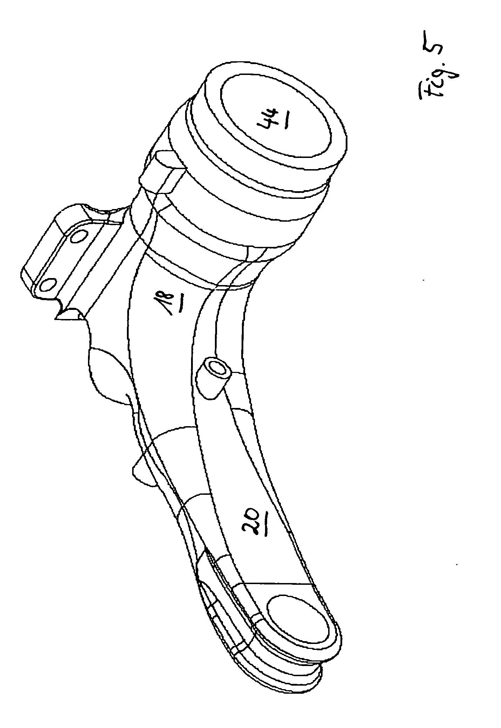

In Fig. 4 ist das einstückige Gussteil der Befestigungshülse 18 mit dem angegossenen Lenker 20 gut erkennbar. In den Lenker ist ein Auge 40 eingegossen, um darin das Lenkerlager zur Verbindung mit der Achsaufnahme 24 einzubauen. In der in Fig. 4 gezeigten Ansicht auf das Gussteil ist der Hohlraumabschnitt 42 erkennbar, in den ein Achsrohr 4 einsteckbar ist. Auf der gegenüberliegenden Seite des Gussteils befindet sich der in Fig. 5 sichtbare Hohlraumabschnitt 44, der zur Aufnahme der Radnabe 6 dient.

Die Erfindung ist nicht auf das vorstehend beschriebene Ausführungsbeispiel beschränkt. Dem Fachmann bereitet es keine Schwierigkeiten, das vorstehende Ausführungsbeispiel auf eine ihm als geeignet erscheinende Weise an einen konkreten Anwendungsfall durch Veränderungen in der Ausführungsweise anzupassen.

## Patentansprüche

1. Kraftfahrzeugachse (2) mit einem Achsrohr (4) und einer endseitig damit verbundenen Radnabe (6), wobei die Radnabe (6) einen stehenden Außenring (8) und einen drehenden Innenring (10) aufweist und der stehende Außenring (8) der Radnabe (6) mit dem Achsrohr (4) verbunden ist, **dadurch gekennzeichnet, dass** eine Befestigungshülse (18), die die Radnabe (6) mit dem Achsrohr (4) verbindet, als ein einziges Gussteil ausgebildet ist, an das der Lenker (20) angeformt ist, und das Gussteil an seinem der Radnabe (6) zugewandten Ende bereichsweise vom Radträger (14) überdeckt ist.

2. Kraftfahrzeugachse nach Anspruch 1, **dadurch gekennzeichnet, dass** das Gussteil einen Hohlraumabschnitt (42), in den ein Teil des Achsrohrs (4) einsteckbar ist, und einen Hohlraumabschnitt (44), in den der Außenring (8) der Radnabe (6) zumindest teilweise einsteckbar ist, aufweist und ein zwischen dem im Hohlraumabschnitt (42) befindlichen Ende des Achsrohrs (4) und dem im Hohlraumabschnitt (44) befindlichen Ende der Radnabe (6) verbleibender Abstand vom Gussteil überbrückt ist.

3. Kraftfahrzeugachse nach Anspruch 2, **dadurch gekennzeichnet, dass** der Lenker (20) in der achsrohrseitigen Hälfte des Gussteils ausgebildet ist und in radialer Richtung zur Längsachse des Gussteils absteht.

4. Kraftfahrzeugachse nach einem der vorhergehenden Ansprüche, **dadurch gekennzeichnet, dass** der Lenker ein Auge (40) für die Aufnahme eine Lenkerlagers, eine Halterung (34) für ein Bremsenbauteil (28) und/oder einen Wellenstummel (38) zur Verbindung mit einem Stoßdämpfer (26) aufweist.

5. Kraftfahrzeugachse nach einem der vorhergehenden Ansprüche, **dadurch gekennzeichnet, dass** an dem Lenker (20) ein Flanschansatz (30) ausgebildet ist.

6. Kraftfahrzeugachse nach einem der vorhergehenden Ansprüche, **dadurch gekennzeichnet, dass** das Gussteil an seinem dem Achsrohr (4) zugewandten Ende eine in Richtung der Längsachse des Achsrohrs (4) verspringende Kante (32) aufweist.

7. Kraftfahrzeugachse nach einem der vorhergehenden Ansprüche, **dadurch gekennzeichnet, dass** der stehende Außenring (8) der Radnabe (6) vom Gussteil gebildet und der drehende Innenring (10) in das Gussteil eingesetzt ist.

## Claims

1. Motor vehicle axle (2) having an axle tube (4) and a wheel hub (6) connected to an end thereof, the wheel hub (6) having a stationary outer annulus (8) and a rotating inner annulus (10) and the stationary outer annulus (8) of the wheel hub (6) being connected to the axle tube (4), **characterised in that** an attaching sleeve (18) which connects the wheel hub (6) to the axle tube (4) takes the form of a single casting with which the trailing arm (20) is integrally formed and the casting is covered, at the end thereof adjacent the wheel hub (6) and in a region or regions, by the wheel mounting (14).

2. Motor vehicle axle according to claim 1, **characterised in that** the casting has a hollow portion (42) in which part of the axle tube (4) can be inserted, and a hollow portion (44) in which at least part of the outer annulus (8) of the wheel hub (6) can be inserted, and a space which is left between that end of the axle tube (4) which is situated in the hollow portion (42) and that end of the wheel hub (6) which is situated in the hollow portion (44) is bridged by the casting.

3. Motor vehicle axle according to claim 2, **characterised in that** the trailing arm (20) is formed on the half of the casting adjacent the axle tube and projects in the radial direction relative to the longitudinal axis of the casting.

4. Motor vehicle axle according to one of the preceding claims, **characterised in that** the trailing arm has an eye (40) to receive a trailing-arm bearing, a mounting (34) for a brake component (28) and/or a stub shaft (38) for connection to a shock-absorber (26).

5. Motor vehicle axle according to one of the preceding claims, **characterised in that** a projection (30) to serve as a flange is formed on the trailing arm (20).

6. Motor vehicle axle according to one of the preceding claims, **characterised in that** the casting has an edge (32) which is recessed in the direction defined by the longitudinal axis of the axle tube (4).

7. Motor vehicle axle according to one of the preceding claims, **characterised in that** the stationary outer annulus (8) of the wheel hub (6) is formed by the casting and the rotating inner annulus (10) is inserted in the casting.

## Revendications

1. Essieu de véhicule automobile (2) avec un tube d'essieu (4) et un moyeu de roue (6) qui y est relié côté extrémité, dans lequel le moyeu de roue (6) présente une bague extérieure fixe (8) et une bague intérieure rotative (10) et la bague extérieure fixe (8) du moyeu de roue (6) est reliée au tube d'essieu (4), **caractérisé en ce qu'**une douille de fixation (18), qui relie le moyeu de roue (6) au tube d'essieu (4), est réalisée sous la forme d'une seule pièce moulée, sur laquelle est moulée le bras (20), et la pièce moulée est recouverte par secteur à son extrémité tournée vers le moyeu de roue (6) par le support de roue (14).

2. Essieu de véhicule automobile selon la revendication 1, **caractérisé en ce que** la pièce moulée présente une section de cavité (42), dans laquelle une partie du tube d'essieu (4) peut être enfichée, et une section de cavité (44), dans laquelle la bague extérieure (8) du moyeu de roue (6) peut être enfichée au moins en partie, et une distance résiduelle entre l'extrémité du tube d'essieu (4) située dans la section de cavité (42) et l'extrémité du moyeu de roue (6) située dans la section de cavité (44) est couverte par la pièce moulée.

3. Essieu de véhicule automobile selon la revendication 2, **caractérisé en ce que** le bras (20) est réalisé dans la moitié côté tube d'essieu de la pièce moulée et fait saillie dans le sens radial par rapport à l'axe longitudinal de la pièce moulée.

4. Essieu de véhicule automobile selon l'une quelconque des revendications précédentes, **caractérisé en ce que** le bras présente un oeil (40) pour la réception d'un palier de bras, un support (34) pour un composant de frein (28) et/ou un bout d'arbre (38) pour le raccordement à un amortisseur de chocs (26).

5. Essieu de véhicule automobile selon l'une quelconque des revendications précédentes, **caractérisé en ce qu'**une embase de bride (30) est réalisée au niveau du bras (20).

6. Essieu de véhicule automobile selon l'une quelconque des revendications précédentes, **caractérisé en ce que** la pièce moulée présente à son extrémité tournée vers le tube d'essieu (4) une arête (32) en saillie dans le sens de l'axe longitudinal du tube d'essieu (4).

7. Essieu de véhicule automobile selon l'une quelconque des revendications précédentes, **caractérisé en ce que** la bague extérieure fixe (8) du moyeu de roue (6) est formée par la pièce moulée et la bague intérieure rotative (10) est insérée dans la pièce moulée.
